# DEMANDE DE BREVET EUROPEEN

(11) **EP 4 744 960 A1**
(43) Date de publication de la demande: **20.05.2026**
(21) Numéro de dépôt: 25212771.7
(22) Date de dépôt: 31.10.2025
(51) Int. Cl.: B60N 2/68, B60N 2/36

(54) **ÉLÉMENT DE DOSSIER DE SIÈGE DE VÉHICULE**

(30) Priorité: 19.11.2024 FR 2412620
(71) Demandeur: Faurecia Sièges d'Automobile, 92000 Nanterre (FR)
(72) Inventeur: RUELLAND, Michel, 91210 DRAVEIL (FR)
(74) Mandataire: Plasseraud IP

(57) **Abrégé**

Elément de dossier de banquette (1), notamment arrière, de véhicule (100), comprenant :
a. une tôle de fond (2) présentant une face avant (3) et une face arrière (4),
b. un verrou (5) disposé du côté de la face avant (3) de la tôle de fond (2) et configuré pour coopérer, dans une position de verrouillage, avec un fil de gâche (102) fixé à un pied (101), notamment arrière, du véhicule du côté de la face arrière (4) de la tôle de fond (2),
dans lequel la tôle de fond (2) comporte une ouverture (6) configurée pour permettre le passage du fil de gâche (102) pour la coopération avec ledit verrou (5), l'ouverture (6) étant délimitée par un bord supérieur (7),
dans lequel l'élément de dossier de banquette (1) comporte une plaque de renfort (10) fixée contre la tôle de fond (2) de manière à border ladite ouverture (6) au moins au niveau de son bord supérieur (7).

## Description

### Domaine technique

La présente divulgation relève du domaine des véhicules notamment automobiles, notamment des dossiers de sièges, notamment de banquettes, de véhicules automobiles. Elle concerne en particulier un élément de dossier de siège, notamment de banquette, en particulier arrière, de véhicule, comprenant une tôle de fond et un verrou configuré pour coopérer avec un fil de gâche fixé à un pied, notamment arrière, de véhicule afin de fixer l'élément de dossier de siège au pied, notamment arrière, de véhicule.

### Technique antérieure

Il est connu de verrouiller un élément de dossier de banquette de véhicule à un pied arrière de véhicule, à l'aide de la coopération entre un fil de gâche, fixé sur le pied de véhicule, et un verrou, présent sur l'élément de dossier de banquette, par exemple comme divulgué par FR 2848929 ou FR3056161.

Un tel agencement permet de sécuriser la position de l'élément de dossier de banquette et d'éviter que le dossier ne se rabatte contre l'assise, par exemple, lorsqu'un passager est assis sur la banquette, notamment en cas de choc.

Il existe néanmoins un besoin pour bénéficier d'un élément de dossier de siège, notamment de banquette, qui permette de sécuriser la fixation entre le fil de gâche et le verrou afin que, en cas de choc, notamment arrière, cette fixation soit maintenue et que l'élément de dossier reste en place.

### Résumé

La présente divulgation vient améliorer la situation.

Il est proposé un élément de dossier de siège, notamment de banquette, notamment arrière, de véhicule, comprenant :
a. une tôle de fond présentant une face avant et une face arrière,
b. un verrou disposé du côté de la face avant de la tôle de fond et configuré pour coopérer, dans une position de verrouillage, avec un fil de gâche fixé à un pied, notamment arrière, du véhicule du côté de la face arrière de la tôle de fond.

La tôle de fond comporte une ouverture configurée pour permettre le passage du fil de gâche pour la coopération avec ledit verrou, l'ouverture étant délimitée par un bord supérieur. L'élément de dossier de siège, notamment de banquette, comporte une plaque de renfort fixée contre la tôle de fond de manière à border ladite ouverture au moins au niveau de son bord supérieur.

L'élément de dossier ainsi réalisé permet de résister notamment en cas de choc arrière et d'assurer un maintien de la fixation entre le verrou et le fil de gâche dans la position de verrouillage.

De plus, la présence de la plaque de renfort n'est pas visible de l'extérieur, étant généralement, comme la tôle de fond, recouverte d'un revêtement tel qu'une moquette.

Les caractéristiques exposées dans les paragraphes suivants peuvent, optionnellement, être mises en oeuvre, indépendamment les unes des autres ou en combinaison les unes avec les autres :

La plaque de renfort est avantageusement fixée à la face arrière de la tôle de fond.

La plaque de renfort est de préférence fixée à la tôle de fond par soudure par points. Dans ce cas, le nombre de points de soudure est par exemple compris entre 3 et 5. Une telle fixation est rapide à mettre en oeuvre et peut être adaptée, notamment le nombre de points de soudure, en fonction de l'effort appliqué.

L'ouverture dans la tôle de fond est de préférence délimitée par deux bords latéraux. Dans ce cas, la plaque de renfort peut présenter une forme de U présentant un bord intérieur en forme de U. La plaque de renfort est par exemple fixée à la tôle de fond de manière à ce que ledit bord intérieur en forme de U de la plaque de renfort borde l'ouverture au niveau du bord supérieur et d'au moins une portion de ses deux bords latéraux à partir dudit bord supérieur.

La plaque de renfort présente de préférence une épaisseur comprise entre 0,5 mm et 2 mm, notamment entre 1,5 mm et 2 mm. La plaque de renfort est de préférence plane, hormis éventuellement la présence des points de soudure.

La tôle de fond présente avantageusement une épaisseur inférieure à celle de la plaque de renfort. La tôle de fond peut présenter une épaisseur de 0,5 mm à plus ou moins 20%.

La tôle de fond est de préférence réalisée en métal, notamment en acier. De même, la pièce de renfort est de préférence réalisée en métal, notamment en acier. La tôle de fond comporte par exemple un premier acier et la pièce de renfort comporte par exemple un deuxième acier, notamment différent du premier acier, ayant un coefficient d'allongement inférieur à celui du premier acier, par exemple inférieur d'au moins 20% à celui du premier acier.

Selon un autre aspect, en combinaison avec tout ou partie de ce qui précède, il est proposé un siège de véhicule, notamment une banquette, en particulier arrière, comportant un élément de dossier de siège tel que défini plus haut.

Selon un autre aspect, en combinaison avec tout ou partie de ce qui précède, il est proposé un véhicule comportant :
a. un pied, notamment arrière,
b. un fil de gâche fixé au pied, notamment arrière, et
c. un siège, notamment une banquette, en particulier arrière, comportant un élément de dossier de siège tel que défini plus haut, le fil de gâche étant configuré pour coopérer avec le verrou dans la position verrouillée.

Le fil de gâche peut présenter une forme de U couché dont les deux extrémités de branches du U sont fixées au pied, notamment arrière, la partie centrale du U du fil de gâche étant configurée pour être en prise avec le verrou dans la position de verrouillage de manière à permettre un degré de liberté de translation relative entre le verrou et ladite partie centrale du U du fil de gâche.

### Brève description des dessins

D'autres caractéristiques, détails et avantages apparaîtront à la lecture de la description détaillée ci-après, et à l'analyse des dessins annexés, sur lesquels :
[Fig. 1] est une vue schématique et en perspective, côté face arrière, d'un exemple d'élément de dossier de siège, dans cet exemple de banquette.
[Fig. 2] montre schématiquement et partiellement un exemple de véhicule comportant un tel élément de dossier de siège, dans la position de verrouillage.
[Fig. 3] montre isolément, schématiquement et en perspective un exemple de plaque de renfort de l'élément de dossier des figures 1 et 2.
[Fig. 4] montre schématiquement, partiellement et en perspective, un exemple d'élément de siège, dans cet exemple de banquette, dans la position de verrouillage.
[Fig. 5] montre schématiquement et en vue de côté un exemple de véhicule.
[Fig. 6] montre schématiquement et en vue de côté le véhicule de la figure 5 lors d'un choc arrière.

### Description des modes de réalisation

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un élément de dossier de siège, notamment de banquette, de véhicule ou d'une banquette de véhicule dans sa position normale d'utilisation.

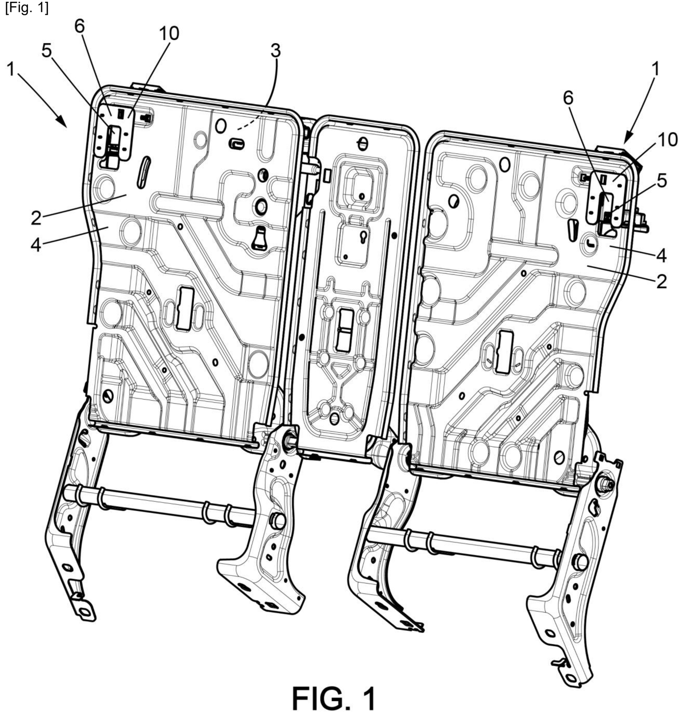

Il est maintenant fait référence à la figure 1. On y voit un élément de dossier 1 de siège, dans cet exemple de banquette, de véhicule, dans cet exemple un élément de dossier de banquette arrière de véhicule. On ne sort pas du cadre de la présente divulgation si l'élément de dossier est un élément de dossier de siège qui n'est pas une banquette.

Cet élément de dossier 1 de banquette comprend une tôle de fond 2 présentant une face avant 3, non visible sur cette figure et une face arrière 4, visible sur cette figure. Sur la figure 1, il y a deux éléments de dossier 1 de banquette, l'un étant à droite et l'autre étant à gauche sur la figure. Par la suite, seul l'élément de dossier 1 de banquette de gauche sera décrit, mais la même description vaut pour l'élément de dossier 1 de banquette de droite.

La tôle de fond 2 forme une partie du dossier de banquette. La tôle de fond 2 peut être recouverte sur la face arrière 4 d'un revêtement tel qu'une moquette. La tôle de fond 2 peut être recouverte sur la face avant 3 d'une matelassure surmontée éventuellement d'une coiffe du dossier ainsi que d'une structure, notamment métallique, du dossier, la structure étant disposée entre la tôle de fond et la matelassure. Dans l'exemple illustré, le revêtement, la matelassure, la coiffe et la structure du dossier ne sont pas représentés, étant connus en soi. La tôle de fond 2 joue un rôle qualitatif mais également un rôle structurel, dans la mesure par exemple où elle permet de retenir les bagages présents dans le coffre, en cas de choc.

La tôle de fond 2 présente une épaisseur de 0,5 mm environ, à plus ou moins 20%. La mince épaisseur de la tôle de fond 2 permet qu'elle reste légère. Elle s'étend généralement, hormis les reliefs qu'elle présente comme visible, dans un plan. La tôle de fond 2 comporte un métal, notamment un premier acier présentant un allongement relativement élevé, ce qui permet une déformabilité lors de la fabrication de celle-ci, afin de réaliser les nombreux reliefs et orifices présents sur la tôle de fond, qui ont notamment pour rôle la fixation de la structure, de la coiffe et/ou de la matelassure ou encore celle du revêtement ou d'autres parties.

L'élément de dossier 1 de banquette comporte encore un verrou 5 disposé du côté de la face avant 3 de la tôle de fond 2. Dans cet exemple, le verrou 5 est fixé à la tôle de fond 2, du côté de la face avant 3 et reste du côté de la face avant 3. Le verrou 5 est configuré pour coopérer, dans une position de verrouillage, avec un fil de gâche, non illustré sur cette figure mais décrit par la suite, fixé à un pied, dans cet exemple arrière, du véhicule du côté de la face arrière 4 de la tôle de fond 2.

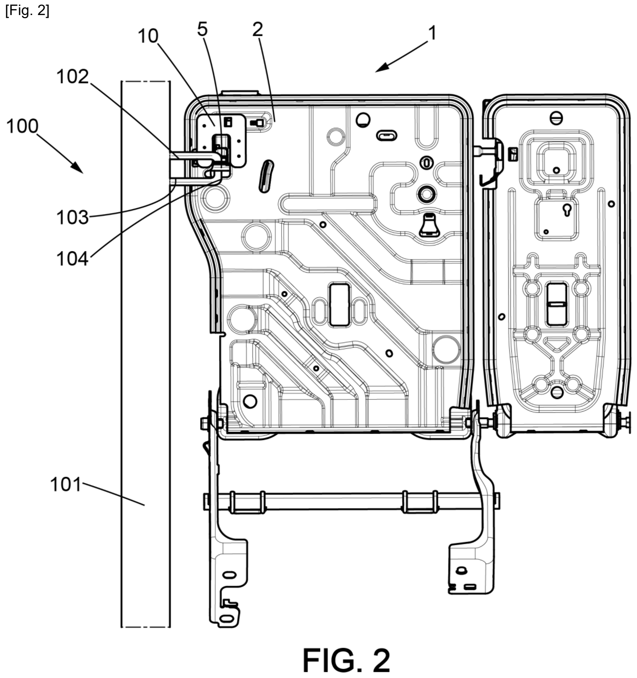

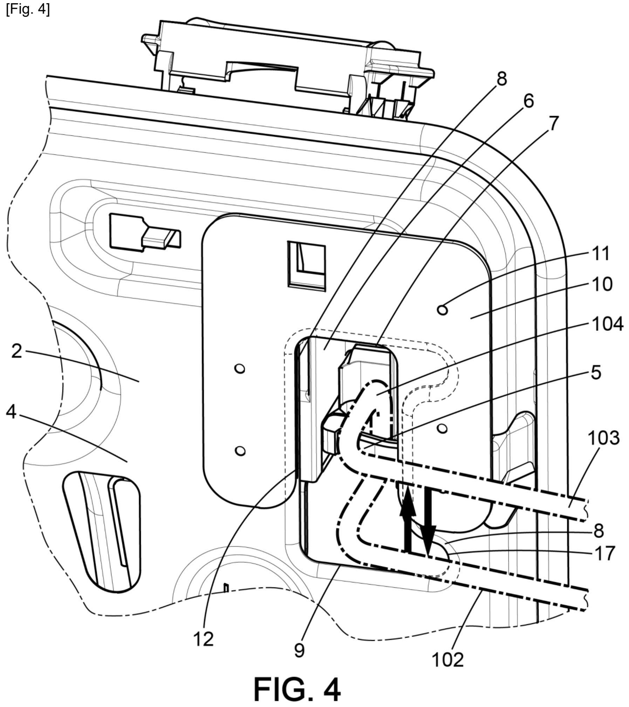

En effet, le véhicule 100 comporte, comme visible sur la figure 2, un pied 101, dans cet exemple un pied arrière. C'est un montant du véhicule solidaire de la carrosserie de celui-ci. Le véhicule 100 comporte également un fil de gâche 102 fixé au pied 101. Le véhicule 100 comporte encore une banquette arrière comportant l'élément de dossier 1 de banquette. Comme on peut le voir sur la figure 2 et également sur la figure 4, le fil de gâche 102 est configuré pour coopérer avec le verrou 5 dans la position de verrouillage.

Dans l'exemple illustré, comme visible sur les figures 2 et 4, le fil de gâche 102 présente une forme de U couché comportant deux branches 103 et une partie centrale 104. Les deux extrémités des branches 103 du U, sensiblement parallèles entre elles, sont fixées au pied 101 tandis que la partie centrale 104 du U du fil de gâche 102 est configurée pour être en prise avec le verrou 5 dans la position de verrouillage, illustrée sur la figure 2 et sur la figure 4, de manière à permettre un degré de liberté de translation relative entre le verrou 5 et la partie centrale 104 du U du fil de gâche 102. Cela permet, comme illustré avec les flèches sur la figure 4 que le fil de gâche 102 puisse se déplacer vers le haut et vers le bas, de quelques millimètres, par exemple de 3 mm maximum, dans la position de verrouillage, par rapport au verrou 5, en cas par exemple de mouvements du véhicule. Cela permet alternativement une tolérance de fabrication et de montage.

La tôle de fond 2 comporte comme visible une ouverture 6 configurée pour permettre le passage du fil de gâche pour la coopération avec le verrou 5. L'ouverture 6 est délimitée par un bord supérieur 7. L'élément de dossier 1 de banquette comporte une plaque de renfort 10 fixée contre la tôle de fond 2 de manière à border l'ouverture 6 au moins au niveau de son bord supérieur 7.

Cela signifie qu'un bord de la plaque de renfort 10 est superposé au bord supérieur 7 de l'ouverture 6.

Sur la figure 4, on visualise que, dans cet exemple, la partie centrale 104 du fil de gâche 102 ne se situe pas dans le plan défini par les branches 103 du fil de gâche 102. En effet, dans cet exemple, la partie centrale 104 bifurque vers l'avant pour pouvoir pénétrer dans l'ouverture 6 afin de venir en prise avec le verrou 5 dans la position de verrouillage. D'autres formes du fil de gâche 102 sont possibles sans sortir du cadre de la présente divulgation. En particulier, le verrou 5 peut s'avancer dans l'ouverture 6 auquel cas la partie centrale 104 du fil de gâche 102 peut s'étendre dans le plan défini par les branches 103, par exemple.

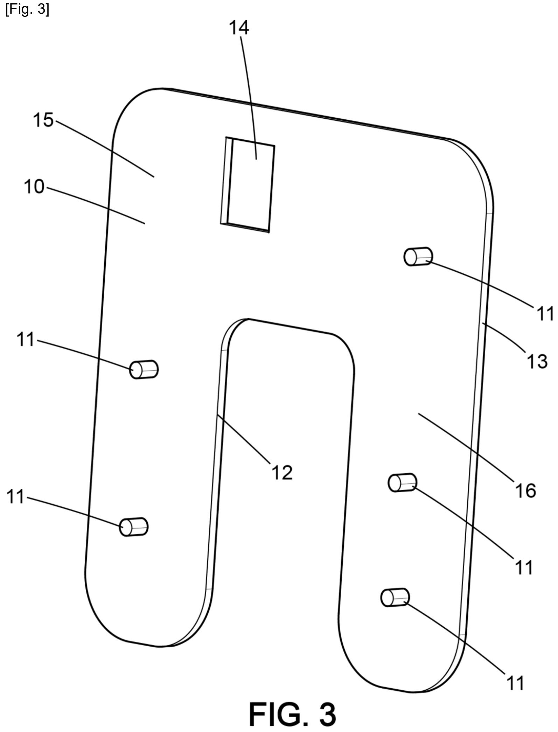

Dans l'exemple illustré, comme visible sur les figures 1, 2 et 4, la plaque de renfort 10 est fixée à la tôle de fond 2, dans cet exemple à la face arrière 4 de la tôle de fond 2. La fixation dans cet exemple est une soudure par points. Le nombre de points de soudure 11 est de cinq, dans cet exemple, comme visible en particulier sur la figure 3, étant dans d'autres exemples de préférence compris entre 3 et 5. Comme visible sur la figure 3, les points de soudure 11 sont présents sur la plaque de renfort 10 et sont fondus au moins partiellement lors de la fixation de la plaque de renfort 10 contre la tôle de fond 2.

Dans l'exemple illustré, l'ouverture 6 est délimitée par deux bords latéraux 8. La plaque de renfort 10 présente dans l'exemple illustré une forme de U présentant un bord intérieur 12 en forme de U, comme visible en particulier sur les figures 3 et 4. La plaque de renfort 10 est fixée à la tôle de fond 2 de manière à ce que le bord intérieur 12 en forme de U de la plaque de renfort 10 borde l'ouverture 6 au niveau du bord supérieur 7 et au niveau d'au moins une portion de ses deux bords latéraux 8 à partir du bord supérieur 7. Le nombre de points de soudure 11 est déterminé en fonction de l'effort appliqué notamment sur le bord intérieur 12 de la plaque de renfort 10.

Dans l'exemple illustré, l'ouverture 6 présente une forme généralement rectangulaire délimitée par le bord supérieur 7, les deux bords latéraux 8 ainsi qu'un bord inférieur 9. Dans cet exemple la plaque de renfort 10 ne borde pas le bord inférieur 9, mais elle pourrait le border sans sortir du cadre de la présente divulgation. Dans un tel cas, la plaque de renfort 10 pourrait présenter une autre forme, notamment en forme de O avec une ouverture intérieure dont la forme serait identique ou au moins similaire à la forme de l'ouverture 6, de manière à pouvoir se superposer. Dans un autre exemple, la plaque de renfort pourrait ne former qu'un rectangle, ou autre forme, dont un bord viendrait se superposer au bord supérieur 7 de l'ouverture 6. D'autres formes de plaque de renfort 10 sont encore possibles, dès lors qu'un bord de la plaque de renfort borde au moins le bord supérieur 7 de l'ouverture 6.

Dans l'exemple illustré, l'ouverture 6 comme le bord intérieur 12 de la plaque de renfort 10 présente des angles arrondis mais ils pourraient être droits, rectilignes, sans sortir du cadre de la présente divulgation.

Dans l'exemple illustré, comme visible notamment sur la figure 4, l'un des bords latéraux 8 présente des parties droites parallèles à l'autre des bords latéraux 8, notamment une partie centrale droite, et également, au moins une, dans cet exemple deux parties concaves 17 vers l'ouverture 6, notamment entourant ladite partie centrale droite et s'étendant jusqu'aux bords supérieur 7 et inférieur 9. Dans ce cas, le bord intérieur 12 ne se superpose qu'à une partie dudit bord latéral 8 qui présente ces parties convexes.

Les dimensions et la forme de l'ouverture 6 sont définies de manière à assurer le passage du fil de gâche 6 dans l'ouverture 6, incluant des tolérances fonctionnelles.

Dans l'exemple illustré, la plaque de renfort 10 présente un bord extérieur 13 en forme de U s'étendant parallèlement, par parties, au bord intérieur 12 comme visible en particulier sur la figure 3. La plaque de renfort 10 est plane et présente une épaisseur sensiblement constante sur toute sa superficie, hormis au niveau des points de soudure 11. La plaque de renfort 10 comporte dans cet exemple une ouverture 14, dans une partie supérieure 15, cette ouverture 14 permettant la mise en place et le positionnement de la plaque de renfort 10 relativement à la tôle de fond 2, lors du procédé de montage et de fixation de la plaque de renfort 10. On note que la largeur de la partie supérieure 15 de la plaque de renfort 10 correspondant à la partie centrale du U, qui est par exemple comprise entre 25 mm et 30 mm, est plus grande que la largeur des parties latérales 16 de la plaque de renfort 10 correspondant aux branches du U. D'autres rapports de largeur sont possibles, dépendant notamment du positionnement et du nombre de points de soudure.

La plaque de renfort 10 présente dans l'exemple illustré une épaisseur comprise entre 0,5 mm et 2 mm, de préférence entre 1,5 mm et 2 mm. Elle est plus épaisse que la tôle de fond 2. La pièce de renfort 10 est métallique et comporte un deuxième acier ayant un coefficient d'allongement inférieur à celui du premier acier de la tôle de fond 2. Ainsi, la pièce de renfort 10, de par son épaisseur et son matériau constitutif est plus rigide et donc mieux apte à résister à une déformation en cas de contact avec le fil de gâche.

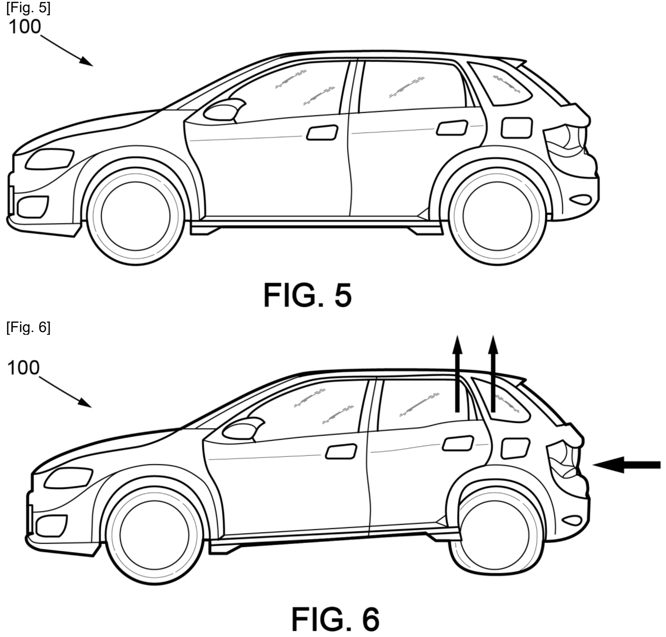

Sur un véhicule 100 illustré sur la figure 5, le véhicule 100 subissant un choc arrière selon la flèche horizontale comme illustré sur la figure 6, le véhicule 100 va réagir par déformation vers le haut, comme illustré sur la figure 6 par les deux flèches parallèles. Alors, le pied 101, notamment arrière, va monter de telle sorte que le fil de gâche 102 va être déplacé relativement au verrou 5 d'une distance supérieure au degré de liberté de translation habituelle, tel que décrit plus haut.

Le fil de gâche 102, lors de ce déplacement inhabituel, va notamment venir en contact avec le bord supérieur 7 de l'ouverture 6.

En l'absence de plaque de renfort 10, le fil de gâche 102 vient déformer la fine tôle de fond 2, n'étant pas arrêté par celle-ci de telle sorte que les efforts du fil de gâche 102 sur le verrou 5 sont très importants au point de briser le verrou et de déverrouiller l'élément de dossier de banquette de telle sorte que le dossier de banquette n'est plus retenu et bascule vers l'avant.

Dans le cas où l'élément de dossier 1 de banquette comporte la plaque de renfort 10, comme dans la présente divulgation, le fil de gâche 102, lors du déplacement inhabituel lié au choc arrière, va venir en contact avec le bord supérieur 7 de l'ouverture 6 ainsi qu'avec un bord, notamment le bord intérieur 12, de la plaque de renfort 10. La superposition de ces deux bords 7 et 12 va permettre d'arrêter le déplacement du fil de gâche 102, de telle sorte que les efforts générés contre le verrou 5 seront limités et que ce dernier ne cèdera pas. Ainsi, en cas de choc arrière sur le véhicule 100, la position de verrouillage sera maintenue et le dossier de banquette, notamment arrière, ne basculera pas vers l'avant.

## Revendications

1. Elément de dossier (1) de siège, notamment de banquette, notamment arrière, de véhicule (100), comprenant :
a. une tôle de fond (2) présentant une face avant (3) et une face arrière (4),
b. un verrou (5) disposé du côté de la face avant (3) de la tôle de fond (2) et configuré pour coopérer, dans une position de verrouillage, avec un fil de gâche (102) fixé à un pied (101), notamment arrière, du véhicule du côté de la face arrière (4) de la tôle de fond (2),
dans lequel la tôle de fond (2) comporte une ouverture (6) configurée pour permettre le passage du fil de gâche (102) pour la coopération avec ledit verrou (5), l'ouverture (6) étant délimitée par un bord supérieur (7),
dans lequel l'élément de dossier de banquette (1) comporte une plaque de renfort (10) fixée contre la tôle de fond (2) de manière à border ladite ouverture (6) au moins au niveau de son bord supérieur (7).

2. Elément de dossier (1) selon la revendication 1, dans lequel la plaque de renfort (10) est fixée à la face arrière (4) de la tôle de fond (2).

3. Elément de dossier (1) selon la revendication 1 ou 2, dans lequel la plaque de renfort (10) est fixée à la tôle de fond (2) par soudure par points.

4. Elément de dossier (1) selon la revendication précédente, dans lequel le nombre de points de soudure (11) est compris entre 3 et 5.

5. Elément de dossier (1) selon l'une quelconque des revendications précédentes, dans lequel l'ouverture (6) est délimitée par deux bords latéraux (8), et dans lequel la plaque de renfort (10) présente une forme de U présentant un bord intérieur (12) en forme de U, la plaque de renfort (10) étant fixée à la tôle de fond (2) de manière à ce que ledit bord intérieur (12) en forme de U de la plaque de renfort (10) borde l'ouverture (6) au niveau du bord supérieur (7) et d'au moins une portion de ses deux bords latéraux (8) à partir dudit bord supérieur (7).

6. Elément de dossier (1) selon l'une quelconque des revendications précédentes, dans lequel la plaque de renfort (10) présente une épaisseur comprise entre 0,5 mm et 2 mm, notamment entre 1,5 mm et 2 mm.

7. Elément de dossier (1) selon l'une quelconque des revendications précédentes, dans lequel la tôle de fond (2) présente une épaisseur inférieure à celle de la plaque de renfort (10).

8. Elément de dossier (1) selon l'une quelconque des revendications précédentes, dans lequel la tôle de fond (2) comporte un premier acier et la pièce de renfort (10) comporte un deuxième acier ayant un coefficient d'allongement inférieur à celui du premier acier.

9. Véhicule (100) comportant :
a. un pied (101), notamment arrière,
b. un fil de gâche (102) fixé au pied (101), notamment arrière,
c. un siège, notamment une banquette, notamment arrière, comportant un élément de dossier (1) selon l'une quelconque des revendications précédentes, le fil de gâche (102) étant configuré pour coopérer avec le verrou (5) dans la position verrouillée.

10. Véhicule (100) selon la revendication précédente, dans lequel le fil de gâche (102) présente une forme de U couché dont les deux extrémités des branches (103) du U sont fixées au pied, la partie centrale (104) du U du fil de gâche (102) étant configurée pour être en prise avec le verrou (5) dans la position de verrouillage de manière à permettre un degré de liberté de translation relative entre le verrou (5) et ladite partie centrale (104) du U du fil de gâche (102).
